# EUROPEAN PATENT SPECIFICATION

(11) **EP 1 303 025 B1**
(45) Date of publication and mention of the grant of the patent: **21.03.2007**
(21) Application number: 02022673.4
(22) Date of filing: 10.10.2002
(51) Int. Cl.: H02K 5/132, H02K 5/22

(54) **Support structure for submersed electric motors**
Trägerstruktur für eine elektrische Tauchmotor
Structure de support pour un moteur électrique submersible

(30) Priority: 16.10.2001 IT PN20010036 U
(43) Date of publication of application: 16.04.2003
(73) Proprietor: SERAFIN, RITA, Gorgo Al Monticano, TV (IT); CARNELOSSO, MARIA CLAUDIA, Chiarano, TV (IT)
(72) Inventor: SERAFIN, RITA, Gorgo Al Monticano, TV (IT); CARNELOSSO, MARIA CLAUDIA, Chiarano, TV (IT)
(74) Representative: Dalla Rosa, Adriano

(56) References cited:
- GB-A- 894 665
- GB-A- 2 110 477
- US-A- 2 740 059
- US-A- 2 790 916
- US-A- 3 997 232

## Description

The invention relates to a support structure for submersed electric motors, which are particularly used for submersed pumps for different uses, and is made with a simple construction and can be assembled in an easy manner.

Submersed motors for different kind of uses are known, and particularly for submersed pumps for different uses, which are adapted to be immersed into liquids introduced in containers to provide for pumping thereof. These submersed motors are substantially composed of at least a driving electric motor connected to one or more impellers for pumping liquids, wherein such an electric motor is enclosed tightly in a box-like envelope with lengthened shape, which is sealed tightly at its end portions by means of locking parts secured to the box-like envelope and supported by a suitable support structure housed internally the box-like envelope and shaped in a manner to rotatably support both the electric motor and the pump impeller.

These submersed electric motors are supplied through electric conductors passing through through holes provided on one of the locking parts, where adequate sealing materials are inserted, while in turn the other locking part is provided with a flexible membrane for balancing the liquid pressure, which is kept on position by means of some securing parts which are joined with each other through bolts and similar securing means. A prior art submersible motor is disclosed in GB 2110477 A. However, the so realized submersed motors give rise to some drawbacks because of the constructive structure thereof. In fact, first of all during the assembling of these motors the motor voltage supply cable, which contains the electric conductors, is introduced through the through hole of the relative locking part by utilizing screws which are introduced on different positions, and which provide for the hermetic locking of the sealing material against both the cable and the through hole, however this locking is not always performed with a steady pressure, thereby giving rise during the time to the danger of damaging the cable and forming of cracks therein, with consequent progressive infiltrations of liquid internally the box-like envelope and the electric motor. Moreover, the other locking part is made in a manner to need a complicate assembling thereof and to make sometimes difficult the correct positioning of the elastic membrane and the tightly sealing thereof.

The present invention has the object to overcome the above mentioned drawbacks and limitations in the submersed electric motors of this kind, by means of the use of a support structure for submersed electric motors which is made in such a manner as to allow the electric supply cable to be inserted sealed tightly effectively therein, with a steady locking pressure preventing any forming of cracks in the same cable, as well as a correct assembling at a sealed condition of the elastic membrane. This support structure is made with the constructive characteristics substantially described, with particular reference to the attached patent claims.

The invention will be better understood from the following description, given solely by way of a not limitative example and with reference to the accompanying drawings, wherein :
- Fig. 1 shows a cross-sectioned front view of the support structure according to the invention, for a submersed electric motor;
- Fig. 2 shows a cross-sectioned front view of a constructive item of the support structure of Fig. 1 ;
- Fig. 3 shows a cross-sectioned front view of another constructive item of the support structure of Fig. 1 ;
- Fig. 4 shows a partially cross-sectioned front view of a further constructive item of the support structure of Fig. 1, on a first constructive version thereof;
- Fig. 5 shows a view from below of the constructive item of Fig. 4;
- Fig. 6 shows a partially cross-sectioned front view of another constructive item of the support structure of Fig. 1, on a first constructive version thereof;
- Fig. 7 shows a plan view of the constructive item of Fig. 6 ;
- Fig. 8 shows a front view of a constructive item of the constructive structure of Fig. 1, on a second constructive version thereof;
- Fig. 9 shows a plan view of the constructive item of Fig. 8 ;
- Fig. 10 shows a cross-sectioned front view of the constructive items of Figs. 3, 8 and 9, assembled together.

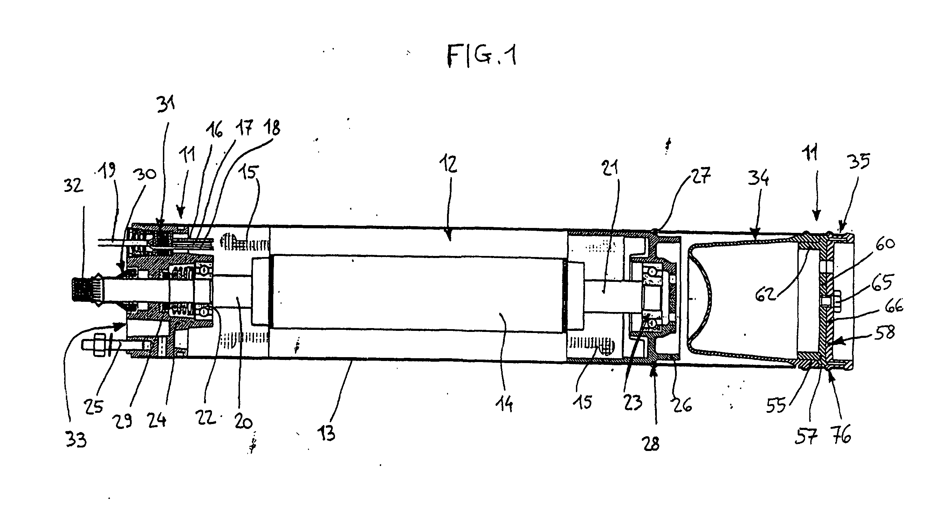

Fig. 1 shows the support structure 11 according to the invention, for supporting rotatably a submersed electric motor 12, which is used particularly for submersed pumps for different uses, adapted to be immersed in liquids to provide for pumping thereof.

As visible from this Figure, the electric motor 12 is arranged in the interior of a box-like envelope 13 with lengthened shape, forming a part of the support structure 11, and is immersed in the dielectric oil contained in the box-like envelope 13, said electric motor being also made of lengthened shape and constituted by a rotor 14 with short circuited bars which is rotating in the interior of electric windings 15, which are supplied by means of electric conductors 16, 17 and 18 enclosed on a cable 19, and is supported rotatably by two side shafts 20 and 21 made of steel, housed into respective bearings 22 and 23, of which the bearing 22 is housed centrally in a side locking part 24, sealingly secured by means of bolts 25 or similar means in one of the side end portions of the box-like envelope 13, and the other bearing 23 is housed centrally in a shaped base 26 inserted internally the box-like envelope 13, at a determinate distance from the other end portion of this latter, by means of a tight coupling of an elastic ring 27 made of harmonic steel , fixed along the outer peripheral zone of the shaped base 26, with a corresponding peripheral slot 28 provided along the inner peripheral zone of the box-like envelope 13, or such a coupling may be obviously made also in a different manner. Moreover, the side locking part 24 is so shaped centrally as to house suitable sealing gaskets 29 and oil retainers 30 into sliding contact with the outer surface of the shaft 20, so as to provide for respectively a tight sealing for infiltrations of liquids into the box-like envelope 13 and preventing the passage of the dielectric oil contained in the same box-like envelope. Such a locking part 24 is shaped laterally with a widened through hole 31 for the passage and fixing on position of the electric voltage supply cable 19 and the relative insulating material as it will be described later, and in turn the shaft 20 supported as described by this locking part is projected with its free end portion 32 beyond the end edge 33 of this locking part, in order that the impeller of the submersed pump (not shown) be coupled with this shaft free end portion.

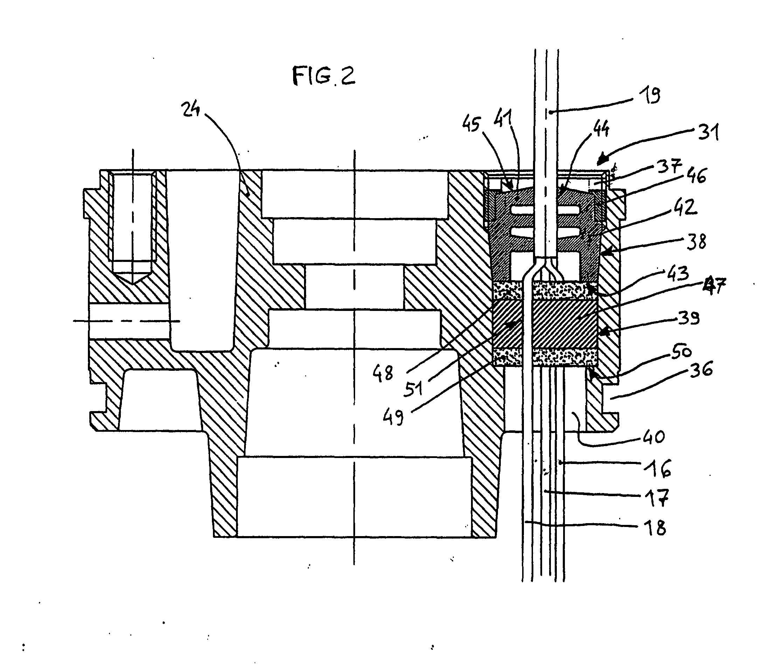

Finally, the other end portion of the box-like envelope is shaped for housing an elastic membrane or diaphragm 34 for balancing the pressure of liquid into which the submersed motor is immersed, with the relative elements 35 for securing it on position at a liquid tightly sealed condition, which elements will be described later. By referring now to the Fig. 2, in which the side locking part 24 without the shaft 20 is shown with an enlarged view, it is noted that it is shaped outside with a peripheral slot 36 for accomodation of a O ring made of a nitrilic rubber or similar means (not shown), adapted to be put into close contact with the inner wall of the box-like envelope 13 during assembling of this latter with such locking part, thereby performing the function to prevent the dielectric oil contained internally said box-like envelope from passing outwards. Besides, the enlarged side through hole 31 of the locking part 24 is shaped at its axial extension firstly with a short cylindrical upper portion 37, followed by an intermediate inclined portion 38 of frusto-conical shape having an inclination converging downwards, which in turn is joined with a lower portion 39 of cylindrical shape, communicating with the cylindrical hole 40 where the electric conductors 16, 17 and 18 are passed. In the hole intermediate inclined portion 38 there are introduced two half-cones 41 and 42 identical and symmetrical to each other, which are so shaped as to fit perfectly such hole intermediate portion, in a manner that on their fully inserted position their bottom 43 is arranged on the lower zone of the inclined wall of said hole inclined portion.

Furthermore, these half-cones 41 and 42 delimit between them a central and axial through hole 44 for passing the voltage supply cable 19 therein and are shaped with an upper head 45 threaded externally and provided on the zone below the cylindrical upper portion 37, which head has a size smaller than the remaining body of said half-cones, thereby delimiting a circular crown for accomodation of a metallic clamping ring nut 46. In turn, the lower hole portion 39 is designed for accomodation of at least a corresponding central small block 47 made of rubber or the like, by employing two thin washers 48 and 49 made of plastic material, of which the upper washer 48 is arranged between the bottom 43 of said half-cones and the upper surface of said small block and the lower washer 49 is arranged between the lower surface of said small block and the bottom 50 of said hole lower portion, and is laid on to said bottom.

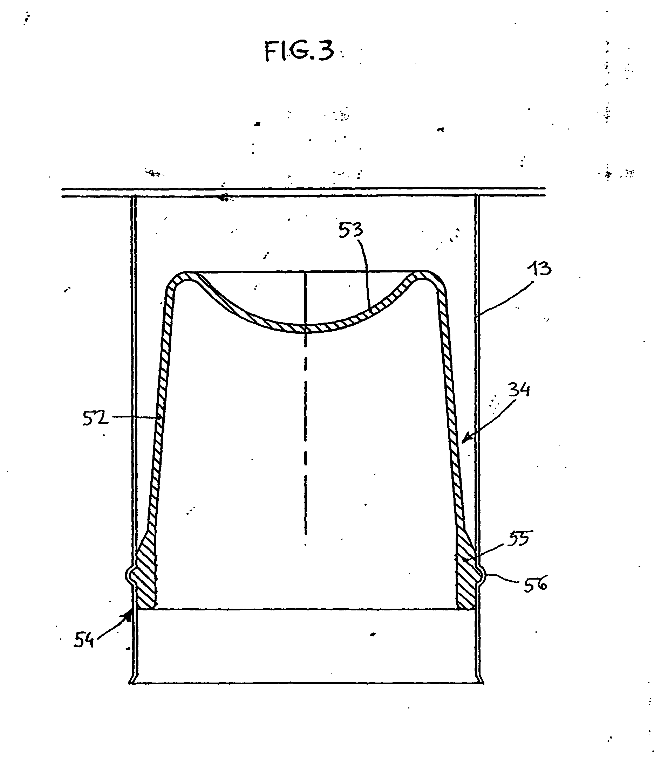

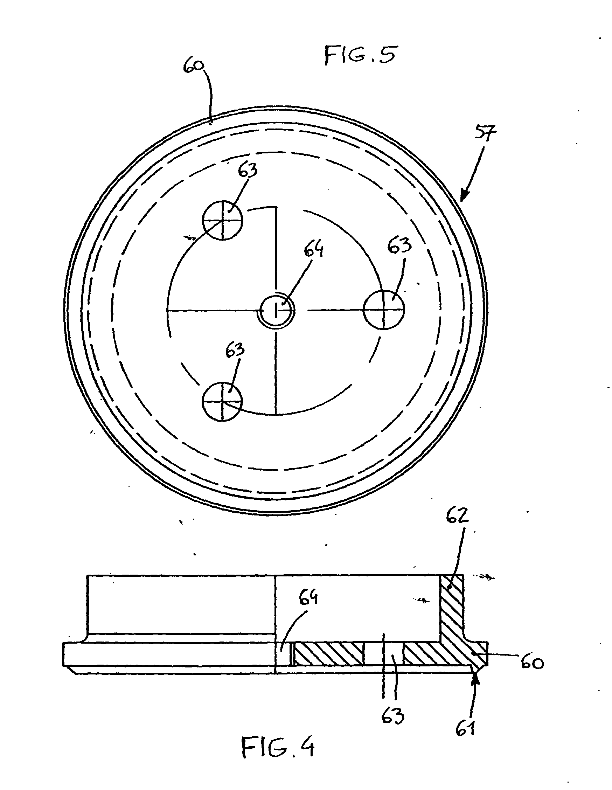

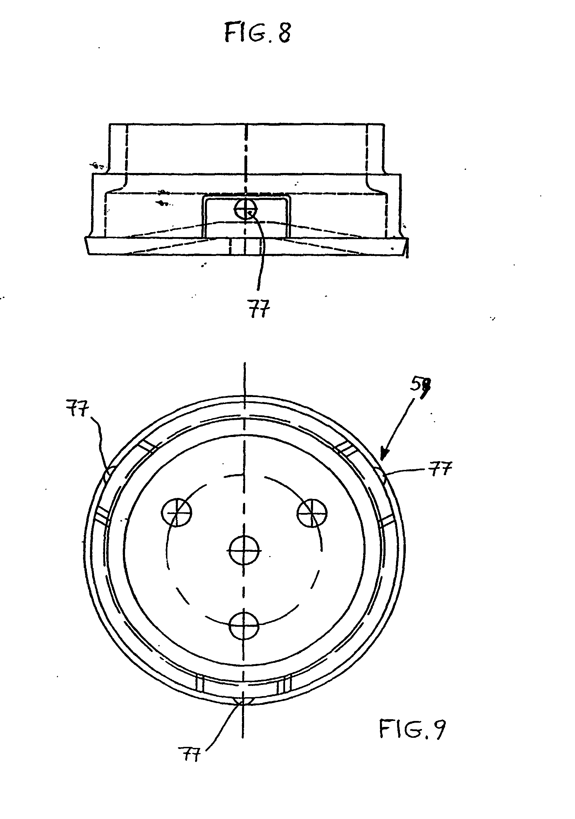

The assembly formed by the central small block 47 and the washers 48 and 49 is crossed by a series of axial through holes (the Figure shows solely the hole 51) for passing the electric conductors of the voltage supply cable. The cable and the relative electric conductors, which are inserted in advance through the various through holes 51, are assembled on position by inserting the ring nut 46 onto the head 45 of the half-cones 41 and 42 and by screwing down it tightly on the same head, thereby causing the half-cones 41 and 42 to enter progressively the hole intermediate portion 38, until such half-cones are fully entered by adhering tigthly against the walls of the same intermediate portion and the cable 19, and compressing also the washers 48 and 49 and the central small block 47, so as to provide for a perfect hermetic sealing of the enlarged through hole 31 without damaging the cable and by avoiding any liquid infiltration through such through hole towards the interior of the box-like envelope 13. Thus, it appears evident the simple construction of closure of the through hole for the cable 19, which is effected by using few component parts which can be adapted to each other in a simple and easy way, by ensuring a safe hermetic sealing and an anti-tearing strenght of the same cable, and this without the use of the component parts used hitherto for the same function. In the Fig. 3, in which the elastic membrane or diaphragm 34 is shown, it is noted that this is made as usual of rubber and shaped with an almost frusto-conical form, with a rectilinear peripheral wall 52 ending with a convex bottom 53, and whose terminal zone 54 is thickened and shaped with a projected peripheral edge 55, forming a circular ring adapted to engage tigthly a corresponding peripheral slot 56 provided for internally the box-like envelope 13, and the assembling and fixing on position of said elastic membrane is completed by utilizing the two component parts 57 and 58 (see Figs. 4, 5 and 6, 7) on a first constructive version thereof or the single component part 59 (see Figs. 8 and 9) on a second constructive version thereof.

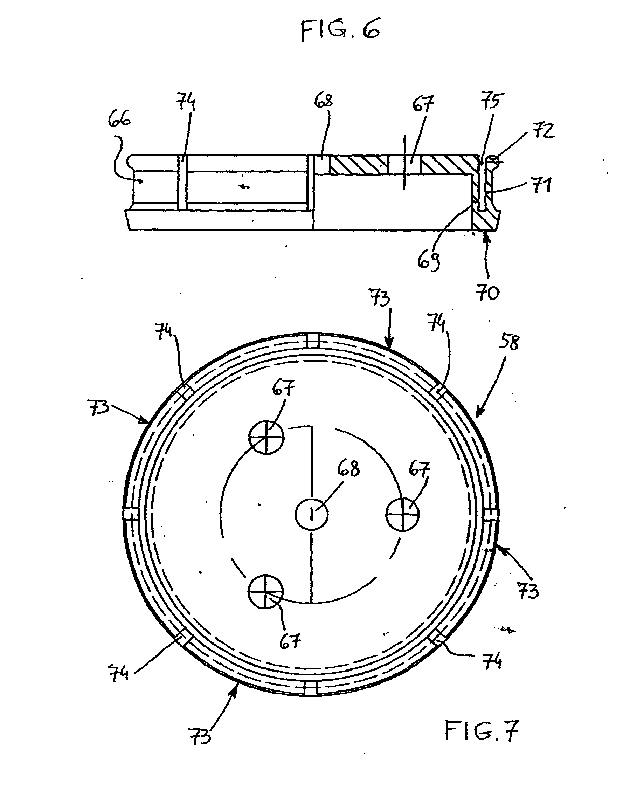

As visible from Figs. 4 and 5, the component part 57 acting as pressure element is made of plastic material and shaped like a circular disc 60 with reduced thickness, the front part of which is provided with a thin projected circular edge 61, having a size smaller that the same disc, and the rear part of which is provided with a short projected cylindrical sleeve 62, having also a size smaller than that of said circular disc. Such circular disc 60 is provided with a series of axial through holes 63, in the present example formed by three angularly equally spaced holes, for the passage of liquid, and a central and axial through hole 64 for the passage of a bolt 65 for securing reciprocally the component parts. In turn, the remaining component part 58 acting as locking part is made of plastic material and also shaped like a circular disc 66 having reduced thickness, provided with a series of axial through holes 67 for the passage of liquid, which are coinciding with the number and the position of the through holes 63 of the disc 60, as well as provided with a central and axial hole 68 coinciding with the through hole 64 of the disc 60. This component part is also shaped with a short cylindrical sleeve 69 having the same size of the circular disc 66 and which is projected from the same disc and the terminal edge 70 of which is bent toward said disc, by forming a series of rectilinear edges 71 slightly spaced away all around the cylindrical sleeve 69 and ending with a thickened edge 72 at the same level of the circular disc 66, thereby defining a series of circular sectors 73 (see Fig. 7) separated from each other by means of radial slits 74.

As visible from the Fig. 1, the component parts 57 and 58 are assembled in the box-like envelope 13 by inserting at first the component part 57 in such a manner that the cylindrical sleeve 62 is turned toward the elastic membrane 34 and the circular disc 60 is turned toward the open end portion of the box-like envelope 13, and by letting the cylindrical sleeve 62 to penetrate up to put the rear surface of the disc 60 to bear against the projected peripheral edge 55 of the elastic membrane 34. Thereafter, the remaining component part 58 is introduced, by arranging its circular disc 66 against the circular disc 60 of the previous component part and putting into concidence all the corresponding through holes of the two discs, in which condition the projected circular edge 61 of the disc 60 enters partially the gap 75 defined between the circular sectors 73 and the cylindrical sleeve 69 of the disc 66, and the thickened edge 72 of said circular sectors bears against such circular disc 60 and enters completely a corresponding inner peripheral slot 76 of the box-like envelope 13, and engages sealingly it. Finally, through the respective central holes 64 and 68 of the component parts 57 and 58 is inserted the threaded bolt 65, the screwing of which determines the reciprocal clamping of said component parts and the elastic membrane 34 and the consequent hermetic sealing of this end portion of the box-like envelope 13. Therefore, it appears evident that this provision makes it possible a hermetic and safe tightly sealing of this end portion of the box-like envelope 13, thanks above all to the presence of the circular sectors 73 which during the clamping step contribute to distribute evenly the forces on the whole locking surface, by utilizing few component parts which can be assembled together in an easy and quick manner, and therefore also with less economic burdens.

In the Figs. 8 and 9 is now shown the component part 59 which can be utilized instead of the two component parts 57 and 58, for performing the same function thereof.

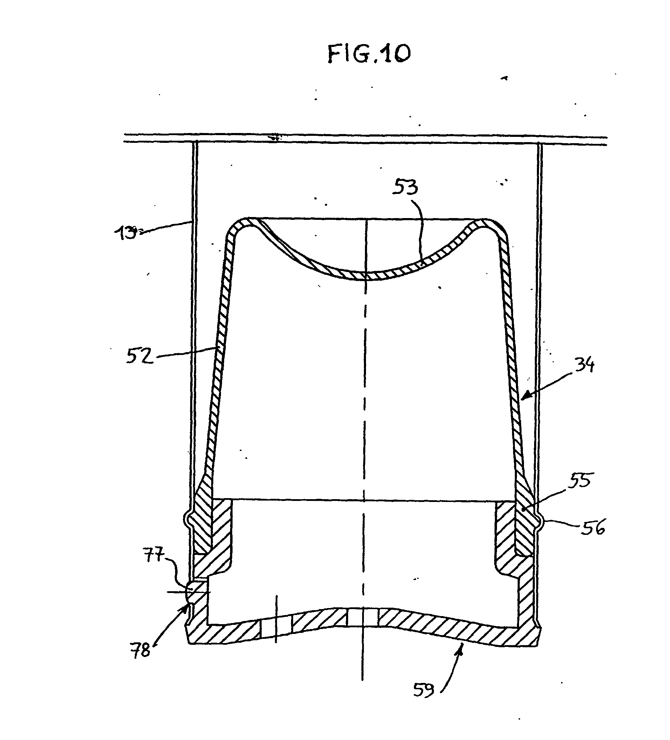

As it can be noticed, this component part 59 is constituted substantially with the same shape of the two component parts joined together, in order to be assembled on and secured to the elastic membrane 34 instead of such component parts in the same manner previously described (see Fig. 10). In this case, this component part is shaped along its peripheral edge with a series of projections 77 equally spaced away angularly, which are adapted to engage corresponding peripheral through holes 78 provided on the box-like envelope 13.

## Claims

1. Support structure for submersed electric motors, which are particularly used for driving in rotation the relative impeller of submersed pumps for pumping liquids, each electric motor being contained into a box-like envelope forming a part of the support structure and being immersed in the dielectric oil contained in the same box-like envelope, as well as being supplied by means of electric conductors enclosed into at least a supply voltage cable, and said box-like envelope being closed at its side end portions by first and second locking means secured tightly thereto, of which said first locking means are provided with at least a through hole for passing said supply voltage cable, with the interposition of clamping and locking means to provide for the hermetic sealing thereof, and said second locking means being adapted to provide for to secure into said box-like envelope of at least an elastic membrane or diaphragm for balancing the liquid pressure, **characterized in that** said clamping and locking means comprise a pair of half-cones (41, 42) co-operating to each other and at least a small block (47) made of rubber or the like and supported by support washers (48, 49), which are bored for the passage of said cable (19) and said electric conductors (16, 17, 18), and are adaptable by inserting them into said through hole (31) by the action of at least a clamping ring nut (46) or the like, to provide for the hermetical sealing fixing, and that said second locking means comprise either a first and a second shaped component part (57, 58) co-operating to each other and with said elastic membrane (34), or a single shaped component part (59) co-operating with said elastic membrane (34), which during the assembling thereof provide for the hermetic sealing of the relative end portion of said box-like envelope (13).

2. Support structure according to claim 1, **characterized in that** said through hole (31) is shaped at its axial extension initially with a short cylindrical upper portion (37), followed by an intermediate inclined portion (38) of frusto-conical shape having an inclination converging downwards, which in turn is joined with a lower portion (39) of cylindrical shape, communicating with a hole (40) where said electric conductors (16, 17, 18) are passed, said hole upper portion (37) being adapted to accommodate said clamping ring nut (46), around the upper head (45) of said pair of half-cones (41, 42), said intermediate inclined hole portion (38) being adapted to accommodate said pair of half-cones (41, 42) and said hole lower portion (39) being adapted to accommodate said small block (47) and said support washers (48, 49).

3. Support structure according to claim 1, **characterized in that** said first shaped component part (57) is shaped like a circular disc (60) with reduced thickness, the front part of which is provided with a thin projected circular edge (61) having a size smaller than the same disc, and the rear of which is provided with a short projected cylindrical sleeve (62) having also a size smaller than that of said circular disc (60), said circular disc (60) being bored axially for the passage of liquid and means (bolt 45) for securing said second component part (58).

4. Support structure according to claim 3, **characterized in that** said second shaped component part (58) is shaped like a circular disc (66) having reduced thickness, provided with a short cylindrical sleeve (69) having the same size of said circular disc (66), and which is projected from the same disc, and the terminal edge (70) of which is bent toward said disc by forming a series of rectilinear edges (71), slightly spaced away all around said cylindrical sleeve (69) and ending with a thickened edge (72) at the same level of said circular disc (66), thereby defining a series of circular sectors (73) separated from each other by means of radial slits (74), said circular discs (60, 66) being arranged into abutment to each other with the relative through holes which are coinciding with each other, in a manner that the projected sleeve (62) of said disc (60) is turned toward said elastic membrane (34) and that the projected sleeve (69) of said disc (66) is turned toward the free end portion of said box-like envelope (13), said discs (60, 66) being joined to each other by means of securing means (65), by providing for the compression of said projected sleeve (62) against said elastic membrane (34), said circular sectors (73) against said box-like envelope (13) and said thickened edge (72) into a corresponding inner peripheral slot (76) of said box-like envelope (13).

5. Support structure according to claim 4, **characterized in that** said single shaped component part (59) is constituted with the same shape of said first and second component part (57, 58) joined together and is provided along its peripheral edge with a series of projections (77) equally spaced away angularly, adapted to engage corresponding peripheral through holes (78) provided on said box-like envelope (13).

## Patentansprüche

1. Trägerstruktur für elektrische Tauchmotoren, die insbesondere zum drehbaren Antrieb des zugehörigen Flügelrades der Tauchpumpen zum Pumpen von Flüssigkeiten verwendet werden, wobei jeder elektrische Motor sich in einem kastenähnlichen Gehäuse befindet, das einen Teil der Trägerstruktur bildet, und eingetaucht ist in das dielektrische Öl, das sich in diesem kastenähnlichen Gehäuse befindet, und wobei jeder Motor durch elektrische Leiter versorgt wird, die in wenigstens ein Spannungsversorgungskabel eingeschlossen sind, wobei ferner das kastenähnliche Gehäuse an seinen seitlichen Endabschnitten geschlossen ist durch erste und zweite Verriegelungsmittel, die dicht daran befestigt sind, von denen die ersten Verriegelungsmittel mit wenigstens einem Durchgangsloch zum Durchgang des Spannungsversorgungskabels versehen ist, mit der Einfügung von Klemm- und Verriegelungsmitteln, um dessen hermetische Abdichtung hervorzurufen und wobei die zweiten Verriegelungsmittel geeignet ist, in dem kastenähnlichen Gehäuse wenigstens eine elastische Membran oder Trennwand zum Ausgleichen des Flüssigkeitsdrucks zu befestigen,
**dadurch gekennzeichnet,**
**dass** die Klemm- und Verriegelungsmittel ein Paar Halbkegel (41, 42) enthalten, die miteinander zusammenwirken, und wenigstens einen kleinen Block (47) aus Gummi oder dergleichen, der von Tragscheiben (48, 49) gehalten ist, die für den Durchgang des Kabels (19) und der elektrischen Leiter (16, 17, 18) durchbohrt, und in der Lage sind, durch Einsetzen derselben in das Durchgangsloch (31) durch die Wirkung von wenigstens einer Klemmringmutter (46) oder dergleichen eine hermetisch abdichtende Befestigung hervorzurufen, und dass die zweiten Verriegelungsmittel entweder ein erstes und ein zweites geformtes Bauteil (57, 58) aufweisen, die miteinander oder mit der elastischen Membran (34) zusammenwirken, oder ein einziges geformtes Bauteil (59) aufweisen, das mit der elastischen Membran (34) zusammenwirkt, was während seiner Montage für die hermetische Abdichtung des zugehörigen Endabschnitts des kastenähnlichen Gehäuses (13) sorgt.

2. Trägerstruktur nach Anspruch 1,
**dadurch gekennzeichnet,**
**dass** das Durchgangsloch (31) in seiner axialen Erstreckung anfänglich mit einem kurzen zylindrischen oberen Abschnitt (37) geformt ist, gefolgt durch einen schrägen Zwischenabschnitt (38) einer Kegelstumpfform mit einer Neigung, die sich nach unten verengt, der seinerseits mit einem unteren Abschnitt (39) einer zylindrischen Form zusammengesetzt ist, der mit einem Loch (40) versehen ist, durch das die elektrischen Leiter (16, 17, 18) hindurch gehen, wobei der obere Abschnitt (37) des Lochs in der Lage ist, die Klemmringmutter (46) aufzunehmen, um den oberen Kopf (45) der zwei Halbkegel (41, 42) herum, und dass der geneigte Zwischenlochabschnitt (38) in der Lage ist, die zwei Halbkegel (41, 42) aufzunehmen, und wobei der untere Lochabschnitt (39) in der Lage ist, den kleinen Block (47) und die Tragscheiben (48, 49) aufzunehmen.

3. Trägerstruktur nach Anspruch 1,
**dadurch gekennzeichnet,**
**dass** das erste geformte Bauteil (57) wie eine kreisförmige Scheibe (60) mit verringerter Dicke geformt ist, deren vorderer Teil mit einem dünnen, vorstehenden, kreisförmigen Rand (61) mit einer Größe versehen ist, die kleiner ist als diejenige der Scheibe, und deren Rückseite mit einer kurzen vorstehenden, zylindrischen Hülse (62) versehen ist, die ebenfalls eine Größe hat, die kleiner ist als diejenige der kreisförmigen Scheibe (60), wobei die kreisförmige Scheibe (60) axial für den Durchgang von Flüssigkeit und für Mittel (Schraube 45) zum Befestigen des zweiten Bauteils (58) durchbohrt ist.

4. Trägerstruktur nach Anspruch 3,
**dadurch gekennzeichnet,**
**dass** das zweite geformte Bauteil (58) wie eine kreisförmige Scheibe (66) mit einer verringerten Dicke geformt ist und mit einer kurzen zylindrischen Hülse (69) versehen ist, die dieselbe Größe wie die kreisförmige Scheibe (66) hat, und die von dieser Scheibe vorsteht, wobei deren begrenzender Rand (70) zu der Scheibe umgebogen ist durch Formen einer Folge von geradlinigen Rändern (71), die geringfügig von der zylindrischen Hülse (69) um diese herum beabstandet sind und in einer verdickten Randkante (72) auf derselben Höhe der kreisförmigen Schreibe (66) enden, wodurch eine Folge von kreisförmigen Sektoren (73) gebildet ist, die voneinander durch radiale Schlitze (74) getrennt sind, wobei die kreisförmigen Scheiben (60, 66) in Anlage aneinander angeordnet sind mit zugehörigen Durchgangslöchern, die miteinander fluchten, auf eine Weise, dass die vorstehende Hülse (62) der Scheibe (60) zu der elastischen Membran (34) hin gerichtet ist und die vorstehende Hülse (69) der Scheibe (66) zu dem freien Endabschnitt des kastenähnlichen Gehäuses (13) hinweist, wobei die Scheiben (60, 66) durch Befestigungsmittel (65) zusammengefügt sind, und ein Druck der vorstehenden Hülse (62) gegen die elastische Membran (34), der kreisförmigen Abschnitte (73) gegen das kastenähnliche Gehäuse (13) und der verdickten Randkante (72) in einen zugehörigen inneren Umfangsschlitz (76) des kastenähnlichen Gehäuses (13) hervorgerufen wird.

5. Trägerstruktur nach Anspruch 4,
**dadurch gekennzeichnet,**
**dass** das einzige geformte Bauteil (59) mit derselben Form des ersten und des zweiten Bauteils (57, 58) gebildet ist, die miteinander verbunden sind, und entlang seines Umfangsrandes eines Folge von Vorsprüngen (77) aufweist, die im gleichen Winkel voneinander beabstandet und in der Lage sind, in entsprechende Umfangslöcher (78) an dem kastenähnlichen Gehäuse (13) einzugreifen.

## Revendications

1. Structure de support pour des moteurs électriques submersibles, qui sont particulièrement utilisés pour mettre en rotation l'impulseur correspondant de pompes submersibles pour pomper des liquides, chaque moteur électrique étant contenu dans une enveloppe ayant une forme de boîte formant une partie de la structure de support et étant immergé dans l'huile diélectrique contenue dans la même enveloppe ayant une forme de boîte, et étant alimenté au moyen de conducteurs électriques compris dans au moins un câble d'alimentation, et ladite enveloppe ayant une forme de boîte étant fermée au niveau de ses extrémités latérales par un premier moyen et un second moyen de verrouillage verrouillés fermement, dont ledit premier moyen de verrouillage est doté d'au moins un trou passant pour faire passer ledit câble d'alimentation, avec l'interposition d'un moyen de fixation et de verrouillage pour obtenir le scellement hermétique de celui-ci, et ledit second moyen de verrouillage étant adapté pour placer dans ladite enveloppe ayant une forme de boîte au moins une membrane ou un diaphragme élastique pour équilibrer la pression du liquide, **caractérisée en ce que** ledit moyen de fixation et de verrouillage comprend une paire de demi-cônes (41, 42) coopérant l'un avec l'autre et au moins un petit bloc (47) composé de caoutchouc ou autre matière similaire et supporté par des rondelles de support (48, 49), qui sont alésées pour permettre le passage dudit câble (19) et lesdits conducteurs électriques (16, 17, 18) et peuvent être adaptées en les insérant dans ledit trou passant (31) par l'action d'au moins un écrou à oeil de fixation (46) ou un autre dispositif, pour obtenir la fixation de scellement hermétique, et **en ce que** ledit second moyen de verrouillage comprend soit une première partie constitutive et une seconde partie constitutive de forme (57, 58) coopérant l'une avec l'autre et avec ladite membrane élastique (34) soit une seule partie constitutive de forme (59) coopérant avec ladite membrane élastique (34), qui au cours de l'assemblage de celle-ci produit le scellement hermétique de l'extrémité correspondante de ladite enveloppe ayant une forme de boîte (13).

2. Structure de support selon la revendication 1, **caractérisée en ce que** ledit trou passant (31) présente une forme à son extension axiale initialement avec une portion supérieure cylindrique courte (37), suivie d'une portion inclinée intermédiaire (38) de forme tronconique ayant une inclinaison convergeant vers le bas, qui est à son tour liée à une portion inférieure (39) de forme cylindrique, communiquant avec un trou (40) dans lequel lesdits conducteurs électriques (16. 17, 18) sont introduits, ladite portion supérieure de trou (37) étant adaptée pour loger ledit écrou à oeil de fixation (46), autour de la tête supérieure (45) de ladite paire de demi-cônes (41, 42), ladite portion de trou inclinée intermédiaire (38) étant adaptée pour loger ladite paire de demi-cônes (41, 42) et ladite portion inférieure de trou (39) étant adaptée pour loger ledit petit bloc (47) et lesdites rondelles de support (48, 49).

3. Structure de support selon la revendication 1, **caractérisée en ce que** ladite première partie constitutive de forme (57) présente une forme similaire à un disque circulaire (6C) avec une épaisseur réduite, la partie avant de celle-ci est dotée d'un bord circulaire mince projeté (61) ayant une taille inférieure au même disque, et l'arrière de celle-ci est doté d'une chemise cylindrique courte projetée (62) ayant également une taille inférieure audit disque circulaire (60), ledit disque circulaire (60) étant alésé axialement pour permettre le passage du liquide et d'un moyen (boulon 45) pour fixer ladite seconde partie constitutive (58).

4. Structure de support selon la revendication 3, **caractérisée en ce que** ladite seconde partie constitutive de forme (58) présente une forme similaire à un disque circulaire (66) ayant une épaisseur réduite, dotée d'une chemise cylindrique courte (69) ayant la même taille que ledit disque circulaire (66), et qui est projetée du même disque, et le bord terminal (70) de celle-ci est plié vers ledit disque en formant un ensemble de bords rectilignes (71), légèrement espacés autour de ladite chemise cylindrique (69) et terminés par un bord épais (72) au même niveau que ledit disque circulaire (66), définissant ainsi un ensemble de secteurs circulaires (73) séparés l'un de l'autre au moyen de fentes radiales (74), lesdits disques circulaires (60, 66) étant disposés en culés l'un par rapport à l'autre avec les trous passants correspondants qui coïncident les uns par rapport aux autres, de sorte que la chemise projetée (62) dudit disque (60) est dirigée vers ladite membrane élastique (34) et de sorte que la chemise projetée (69) dudit disque (66) est dirigée vers l'extrémité libre de ladite enveloppe ayant une forme de boîte (13), lesdits disques (60, 66) étant liés par des moyens de fixation (65), en fournissant une compression de ladite chemise projetée (62) contre ladite membrane élastique (34), desdits secteurs circulaires (73) contre ladite enveloppe ayant une forme de boîte (13) et dudit bord épais (72) dans une rainure périphérique intérieure correspondante (76) de ladite enveloppe ayant une forme de boîte (13).

5. Structure de support selon la revendication 4, **caractérisée en ce que** ladite partie constitutive de forme unique (59) est constituée avec la même forme que ladite première partie constitutive et ladite seconde partie constitutive (57, 58) liées conjointement et est disposée sur son bord périphérique avec un ensemble de projections (77) espacées également de manière angulaire, adaptées de manière à engager les trous passants périphériques correspondants (78) disposés sur ladite enveloppe ayant une forme de boîte (13).
